(19) Europäisches Patentamt
European Patent Office
Office européen des brevets

(11) **EP 2 557 718 A1**

(12) **EUROPEAN PATENT APPLICATION**
published in accordance with Art. 153(4) EPC

(43) Date of publication:
**13.02.2013 Bulletin 2013/07**

(51) Int Cl.:
*H04L 1/06* (2006.01)

(21) Application number: **10849212.5**

(86) International application number:
**PCT/CN2010/000442**

(22) Date of filing: **06.04.2010**

(87) International publication number:
**WO 2011/123972 (13.10.2011 Gazette 2011/41)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **Alcatel Lucent**
**75007 Paris (FR)**

(72) Inventors:
• **LV, Di**
**Shanghai 201206 (CN)**

• **YANG, Hongwei**
**Shanghai 201206 (CN)**

(74) Representative: **Dreiss Patentanwälte**
**Gerokstrasse 1**
**70188 Stuttgart (DE)**

(54) **METHOD AND DEVICE FOR PERFORMING HIERARCHY FEEDBACK WITH SPACE INFORMATION ASSISTED**

(57)    A method for performing hierarchical feedback with space information assisted in a mobile communication system is provided. At the user terminal, the method comprises: measuring a space correlated matrix of multiple transmit antennas of a base station; converting a hierarchical code book in the mode of hierarchical feedback by using the spatial correlation matrix; selecting the code word from the converted hierarchical code book; and feedbacking a pre-coding matrix index corresponding to the index of the selected code word and the space correlated correlation matrix from the user terminal to the base station by using the mode of hierarchical feedback.

FIG. 2

**Description**

FIELD OF THE INVENTION

The present invention relates to the field of mobile communications, and more specifically, to a method and apparatus for performing spatial information-assisted hierarchical feedback in a mobile communication system, which consider spatial characters of a channel of a user terminal (UE) to perform hierarchical feedback to thereby improve feedback accuracy.

BACKGROUND OF THE INVENTION

The long-term evolution release 8 (LTE Rel-8) standard specifically optimizes a feedback policy and codebook for SU-MIMO (single-user Multiple Input Multiple Output). However, it is already known that MU-MIMO is more sensitive to feedback accuracy than SU-MIMO. The low feedback accuracy will cause a deteriorated MU-MIMO performance and thus blocks the exploration on theoretical potentials of MU-MIMO. In order to solve this problem, the discussion of latest LTE-A focuses on an advanced feedback mechanism for enhancing MU-MIMO performance. Hierarchical feedback is a very promising candidate scheme.

It is desirable to provide an effective method to enhance the MU-MIMO feedback accuracy. Although the traditional hierarchical feedback utilizes the correlation of a UE's channel on time domain or frequency domain, it does not consider spatial characters of the channel.

SUMMARY OF THE INVENTION

In order to overcome the above deficiencies in the prior art, the present invention is proposed. Therefore, an objective of the present invention is to provide a method and apparatus for performing spatial information-assisted hierarchical feedback in a mobile communication system, which are capable of considering spatial characters of a UE's channel to perform hierarchical feedback to thereby improve feedback accuracy.

In order to achieve the above objective, according to the present invention, there is provided a method for performing spatial information-assisted hierarchical feedback in a mobile communication system, at a user terminal, the method comprising: measuring a spatial correlation matrix of multiple transmit antennas of a base station; transforming a hierarchical codebook in a hierarchical feedback mode using the spatial correlation matrix; selecting a codeword from the transformed hierarchical codebook; and feeding back the spatial correlation matrix and a precoding matrix index corresponding to an index of the selected codeword from the user terminal to the base station using the hierarchical feedback mode.

Preferably, at the base station, the method comprises: re-constructing the selected codeword based on the spatial correlation matrix and the precoding matrix index as fed back from the user terminal to perform precoding and scheduling.

Preferably, the hierarchical codebook in the hierarchical feedback mode is a codebook as trained and constructed based on time or frequency information of a channel of the user terminal.

Preferably, selecting a codeword from the transformed hierarchical codebook comprises: selecting a deepest-level codeword from the transformed hierarchical codebook.

Preferably, transforming a hierarchical codebook in a hierarchical feedback mode using the spatial correlation matrix comprises: pre-multiplying the spatial correlation matrix by a codeword in each level of the hierarchical codebook in the hierarchical feedback mode.

Preferably, the spatial correlation matrix is long-term information synchronized between the base station and the user terminal over a period that is far longer than the period of feeding back the precoding matrix index.

Preferably, the mobile communication system is a multi-user Multiple Input Multiple Output communication system.

In order to achieve the above objective, according to the present invention, there is further provided an apparatus for performing spatial information-assisted hierarchical feedback in a mobile communication system, comprising: a measuring component configured to measure a spatial correlation matrix of multiple transmit antennas of a base station; a transforming component configured to transform a hierarchical codebook in a hierarchical feedback mode using the spatial correlation matrix; a selecting component configured to select a codeword from the transformed hierarchical codebook; and a feedback component configured to feed back the spatial correlation matrix and a precoding matrix index corresponding to an index of the selected codeword from the user terminal to the base station using the hierarchical feedback mode.

To sum up, according to the present invention, there is provided a feedback architecture that combines advantages of hierarchical feedback and UE spatial information, which can provide enhanced feedback accuracy over a traditional hierarchical feedback.

BRIEF DESCRIPTION OF THE DRAWINGS

Based on the following detailed depiction on the non-limiting embodiments of the present invention in conjunction with the drawings, the above and other objectives, features and advantages of the present invention will become more apparent, wherein:

Fig.1 shows an example of a binary tree-structure codebook in a hierarchical feedback;

Fig. 2 shows a flowchart of a method for performing spatial information-assisted hierarchical feedback in a mobile communication system according to the present invention; and

Fig. 3 shows a flowchart of an apparatus for performing spatial information-assisted hierarchical feedback in a mobile communication system according to the present invention.

DETAILED DESCRIPTION OF EMBODIMENTS

Hereinafter, the present invention will be described with reference to the drawings. In the following depiction, some specific embodiments are only for illustrative purposes and they should not be understood as any limitation to the present invention, but only examples. When traditional structures or architectures will potentially cause ambiguities on the understanding of the present invention, they will be omitted.

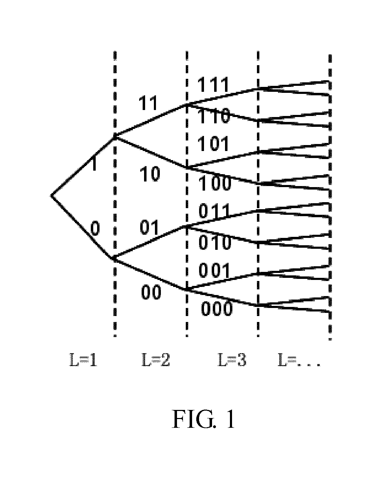

The idea of hierarchical feedback is originated from improving feedback accuracy and improving the overall performance of a wireless communication system having a limited feedback. The hierarchical feedback mechanism utilizes the correlation of a physical channel in terms of time domain or frequency domain. A codebook in the hierarchical feedback is organized in a binary tree structure, and indexes for coupling codewords in a given subtree at the $j^{th}$ level have the same (j-1) valid bits, as shown in Fig. 1.

When the channel changes slowly, the hierarchical feedback will cause a more accurate description on the UE channel over the traditional feedback. In other words, in terms of fixed feedback overheads, the hierarchical feedback indexes a codeword in a far greater codebook. Suppose Bmax denotes the overall levels of a tree in the hierarchical codebook, while B_feedback denotes the number of bits of PMI (precoding matrix index) in an uplink feedback signaling. In terms of the current LTE standard, B_feedback = 4, and here, as an example, Bmax = 12 is adopted. The hierarchical feedback may be explained by adopting the following scenario as an example:

At the start of uplink feedback, i.e., at time t_0, UE selects a deepest-level codeword from the hierarchical codebook, with an index being Idx_0 = [1 0 0 1 0 0 1 0 0 1 1 0]. However, the UE feeds back the previous B_feedback bits of Idx_0 and feeds back PMI at t_0 as: PMI_0= [1 0 0 1].

At the next feedback time, i.e., at time t_1, UE still selects a deepest-level codeword from the hierarchical codebook, and the index of the codeword is Idx_1 = [1 0 0 1 0 0 0 0 1 1 1 0]. According the hierarchical feedback algorithm, the UE feeds back the intermediate (B_feedback-1) bits of Idx_1, while in the PMI feedback, the first bit is used to indicate the scenario of "downward" (i.e., downward search in the hierarchical tree). Thus, the feedback PMI at t_1 is: PMI_1 = [1 0 0 0], wherein the first bit "1" corresponds to "downward" as negotiated at the UE and eNB (base station), and the last three bits correspond to the fifth, sixth, and seventh bits of Idx_1, respectively.

In this way, when receiving PMI_1 = [1 0 0 0], the eNB may re-construct a portion of Idx_0 based on PMI_1 and PMI_0. The index of the re-constructed codeword is PMI_1_re = [1 0 0 1 0 0 0]. From this example, it may be clearly seen that when the channel changes slowly, the hierarchical feedback and its corresponding codebook structure can realize a more accurate feedback of the channel information, and the front several bits of successive codewords reside in the same subtree.

It may be further noted that the hierarchical feedback merely utilizes the correlation of UE channel in time domain or frequency domain. The selection of the codeword is uniquely based on the time or frequency information of the UE channel. The codebook itself is subjected to training and construction, without considering spatial characters of the channel. However, in the actual propagation environment, channels are correlated, and if codeword search and update does not consider the spatial character of channels, suboptimal codeword might be caused.

Basic idea of the solution according to the present invention comprises:

Step 1: in each uplink feedback frame, the UE measures and calculates its spatial correlation matrix;

Step 2: the UE transforms a basic hierarchical codebook by using a synchronized spatial correlation matrix (as shown in Fig. 1) to form a new hierarchical codebook.

Step 3: the UE selects a codeword from the deepest level in the newly generated codebook based on a predetermined standard (for example, minimizing spatial distance, maximizing system capacity, etc.);

Step 4: the UE derives a 4-bit feedback PMI based on the codeword index as generated in step 3 according to the hierarchical feedback algorithm. Then, the UE feeds back PMI to eNB. If the frame is a spatial information updating frame, then the UE needs to feed back the spatial correlation matrix. It should be noted that the spatial correlation information may be looked upon as long-term information that is synchronized between eNB and UE in a period far longer than the PMI feedback period.

Step 5: the eNB re-constructs the UE PMI based on the feedback PMI in step 3, the feedback PMI known from the same UE in the preceding feedback time, and a predefined hierarchical feedback algorithm;

Step 6: the eNB performs scheduling and precoding based on the information obtained in step 5. It should be noted that the eNB may decode the reported PMI and corresponding codeword.

The present invention may be described using the following example.

Suppose a MU-MIMO system has K users, BS is equipped with M transmit antennas, and each UE has N receive antennas. It may also be supposed that Bmax=12 and B_feedback=4. In other words, there are 12 levels in the hierarchical codebook tree, and each feedback PMI may be represented by 4 bits. Thus, the codebook tree has $2^{13}$ -2 = 8190 codewords in total, and these codewords are organized as shown in Fig. 1. The downlink merely allows transmission of a single stream, and all codewords have $M \times 1$ dimensions. The channel from BS to the $k^{th}$ user is denoted by $N \times M$ matrix $\mathbf{H}_k$.

Step 1: calculation of spatial correlation matrix

At the first UE feedback frame t_0, the UE k measures the $M \times M$ spatial correlation matrix $\mathbf{R}_{k0} = \frac{1}{|S|}\sum_s \mathbf{H}_{k0}^H \mathbf{H}_{k0}$ of

M transmit antennas of the base station, wherein s denotes a subcarrier for averaging the spatial correlation matrix thereon. It may be subcarrier, dozens of subcarriers, or the entire bandwidth dependent on the propagation scenario and feedback budge as permitted for the spatial correlation matrix.

Step 2: generating a new codeword comprising the spatial correlation information.

$\mathbf{R}_{k0}$ is pre-multiplied with coupling of codewords at the first level of the hierarchical codebook, i.e., the codewords in Fig. 1 whose indexes are [0] and [1] respectively, i.e., cd_0 and cd_1. The obtained codewords are cd_new_0 and cd_new_1. A codeword having a less cosine distance with eigen channel $\mathbf{h}_{k0}$ is selected as the root for tree search in the next step.

$$\mathbf{cd\_10\_new} = \frac{\mathbf{R}_{k0}\mathbf{cd\_10}}{|\mathbf{R}_{kj}\mathbf{cd\_10}|}, \quad \mathbf{cd\_10\_new} = \frac{\mathbf{R}_{k0}\mathbf{cd\_10}}{|\mathbf{R}_{kj}\mathbf{cd\_10}|}, \quad \text{and} \quad \mathbf{h}_{k0} = \mathbf{U}(:,1)'\mathbf{H}_{k0},$$

wherein $\mathbf{U}(:,1)$ is the first column of left singular matrix of $\mathbf{H}_{k0}$.

Step 3: Selecting a deepest-level codeword from the hierarchical tree.

If cd_new_0 is selected at step 2, then the same process in step 2 is performed to the coupling of codeword originated from codeword "0" as shown in Fig. 1. In other words, the spatial correlation matrix $\mathbf{R}k_0$ performs transformation to codewords with indexes of [00] and [01]. The selecting process will be performed to coupling of the codewords so as to determine the root for the next tree search.

The process of performing codeword selection -> level downward in the hierarchical tree -> generating a new codeword will be performed, till a leaf code is selected. For example, suppose the codeword [0 1 0 1 0 0 1 1 0 1 1 0] is selected.

Step 4: determining and feeding back PMI

Because a first uplink feedback frame is supposed, eNB does not know in advance the PMI spatial correlation information of UE k. Therefore, the spatial correlation matrix $\mathbf{R}_{k0}$ is fed back to eNB in the form of vector or scale. Besides the spatial correlation matrix, the front 4 bits of the index of the selected codeword, i.e., PMI_0 = [0 1 0 1], are fed back to eNB.

Step 5: re-constructing the codeword at eNB

When receiving $\mathbf{R}_{k0}$ and PMI_0 = [0 1 0 1] and after it is determined that it is the first uplink feedback from UE k, the eNB re-constructs a desired codeword in the following manner. First, the codeword with an index [0 1 0 1] is searched from the hierarchical codebook, i.e., cd_0101, and the re-constructed codeword is expressed as

$$\mathbf{cd\_0101\_new} = \frac{\mathbf{R}_{k0}\mathbf{cd\_0101}}{|\mathbf{R}_{kj}\mathbf{cd\_0101}|}. \qquad\qquad . \quad (1)$$

Step 6: precoding and scheduling

After obtaining original codewords from all UEs in the cell, the eNB uses these original codewords in different ways. Here, suppose the reported PMI is quantization of valid channel of UE, then greedy search and zero-forcing precoding based on the total capacity are performed. The eNB selects a subset of UEs having a capacity with a maximum weighted sum. The UE channel is expressed as $\hat{\mathbf{H}}(S) = [\hat{\mathbf{h}}_{s_1}^T, ..., \hat{\mathbf{h}}_{s_{|S|}}^T]^T$ , wherein $\hat{\mathbf{h}}_i^T$ ( $\hat{\mathbf{h}}_i^T$ denotes transposition of the reconstructed codeword of the ith UE) is obtained in the same manner as described in step 5. The final precoder for the subset of selected users is $\hat{\mathbf{H}}(S)^H(\hat{\mathbf{H}}(S)\hat{\mathbf{H}}(S)^H)^{-1} \text{diag}(\mathbf{p})^{1/2}$ , wherein p denotes the power distribution vector.

Step 4.1: PMI determination and feedback for subsequent frames

Step 4 describes the process of PMI determination and feedback for the first uplink feedback frame, but it is slightly different in subsequent frames. In the hierarchical feedback frame architecture, for a frame different from the first frame, (B_feedback-1) bits of PMI are allocated to indicate certain portion of 12 bit indexes of the selected codeword, and 1 bit is used to indicate the relationship between the PMI of the previous frame and the 12 bit indexes of the current frame. For example, in the first uplink feedback, PMI_0 = [0 1 0 1] is fed back to eNB.

Scenario 1: in the second uplink feedback frame, the index of the selected codeword is Idx_1 = [0 1 0 1 1 0 1 1 0 0 1 0]. The UE determines this scenario as "downward" scenario, because the front 4 bits of Idx_1 are identical to PMI_0. The first bit of PMI_1 will be used to indicate downward "1" (which is known at both eNB and UE), and the fifth, sixth, and seventh bits of Idx_1 are filled into the remaining bits of PMI_1. Thus, PMI_1 = [1 1 0 1].

Scenario 2: in the second uplink feedback frame, the index of the selected codeword is Idx_1 = [0 1 1 0 1 0 1 1 0 0 1 0]. The UE determines this scenario as "upward" scenario, because the front 4 bits of Idx_1 are different from PMI_0. The first bit of PMI_1 will be used to indicate upward "0" (known at both eNB and UE), and the remaining bits of PMI_1 are filled by three bits of Idx_1. And considering characters of the channel, the selected three bits in PMI_1 can be set in a better way. Here, it may be simply supposed that in this scenario, the front (B_feedback-1) bits of Idx_1, as well as obtained PMI_1 = [0 0 1 1], will be used.

After receiving the new feedback PMI, the eNB may re-construct a portion or all of idx_1 based on the PMI_1 it already knows and the negotiation algorithm determined by additional bits for the "downward" and "upward" scenarios between the eNB and UE. Afterwards, precoding and scheduling may be performed.

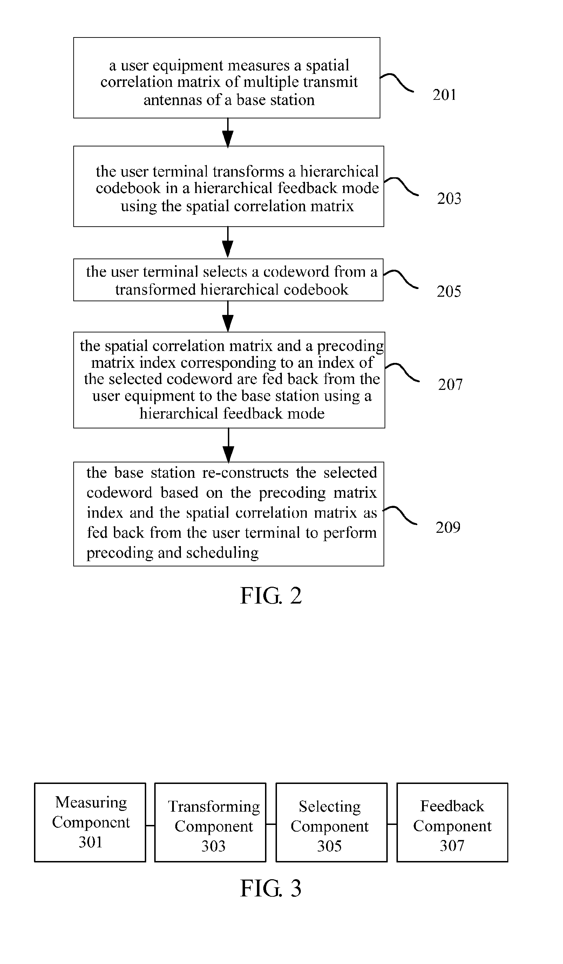

Fig. 2 shows a flowchart of a method for performing spatial information-assisted hierarchical feedback in a mobile communication system according to the present invention.

As shown in Fig. 2, in step 201, a user equipment measures a spatial correlation matrix of multiple transmit antennas of a base station. In step 203, the user terminal transforms a hierarchical codebook in a hierarchical feedback mode using the spatial correlation matrix. In step 205, the user terminal selects a codeword from a transformed hierarchical codebook. In step 207, a precoding matrix index corresponding to an index of the selected codeword and the spatial correlation matrix are fed back from the user equipment to the base station using a hierarchical feedback mode. In step 209, the base station re-constructs the selected codeword based on the precoding matrix index and the spatial correlation matrix as fed back from the user terminal to perform precoding and scheduling.

Fig. 3 shows a flowchart of an apparatus for performing spatial information-assisted hierarchical feedback in a mobile communication system according to the present invention.

As shown in Fig. 3, the apparatus comprises: a measuring component 301, a transforming component 303, a selecting component 305, and a feedback component 307. The measuring component 301 measures a spatial correlation matrix of multiple transmit antennas of a base station. The transforming component 303 transforms a hierarchical codebook in a hierarchical feedback mode using the spatial correlation matrix. The selecting component 305 selects a codeword from the transformed hierarchical codebook. The feedback component 307 feeds back a precoding matrix index corresponding to an index of the selected codeword and the spatial correlation matrix from the user equipment to the base station using a hierarchical feedback mode.

System simulation has been performed. The simulation hypotheses and results are summarized below:

| Channel model | ITU Urban microcell |
|---|---|
| Antenna configuration | 4-Tx eNB: ULA, 0.5 lambda / 4 lambda<br>2-Rx UE: ULA, 0.5 lambda |
| Duplex mode | FDD |
| Scheduler | Proportional equity and frequency selection scheduling ;<br>Scheduling granularity of a subframe |

(continued)

| Channel model | ITU Urban microcell |
|---|---|
| Link adaptation | Non-ideal CQI (i.e., quantizing feedback CQI based on MCS level) |
| Channel estimation | Ideal channel estimation |
| Feedback deterioration | CQI/PMI reporting period: 5ms; CQI/PMI feedback: sub-frequency band (5 RB); delay: 6ms; PMI feedback: 4bits (for hierarchical and non-hierarchical) |
| Receiver | MMSE |
| Downlink precoding | Zero-forcing precoding |
| Control channel and reference signal overheads: | Fixed 0.3063 (as permitted in the ITU evaluation) |
| PMI selection method | Tree search for hierarchical feedback and linearity for basic feedback and other feedback |
| Codebook | Hierarchical codebook |

Tx antenna spacing = 0.5 wavelength

| Feedback mode | Codebook | Cell average SE (bps/Hz/cell) | Cell edge SE (bps/Hz) |
|---|---|---|---|
| Hierarchical w/o spatial correlation | codebook_IID_M4N2_highSNR_orth (IID) | 2.53 (100%) | 0.085 (100%) |
| Hierarchical w spatial correlation | codebook_IID_M4N2_highSNR_orth (IID) | 3.22 (128%) | 0.096 (113%) |

Tx antenna spacing =4 wavelength

| Feedback mode | Codebook | Cell average SE (bps/Hz/cell) | Cell edge SE (bps/Hz) |
|---|---|---|---|
| Hierarchical w/o spatial correlation | codebook_IID_M4N2_highSNR_orth (IID) | 2.48 (100%) | 0.077 (100%) |
| Hierarchical w spatial correlation | codebook_IID_M4N2_highSNR_orth (IID) | 2.74 (110%) | 0.083 (108%) |

The simulation result shows that when the spatial correlation between antennas are relatively strong, i.e., Tx antenna spacing =0.5 wavelength, compared with a single hierarchical feedback, the spatial correlation plus hierarchical feedback may bring 28% cell average frequency spectrum efficiency (SE) and 13% cell edge SE. When the antenna spacing becomes larger, i.e., Tx antenna spacing =4 wavelength, the spatial correlation gain is reduced to 10% cell average SE and 8% cell edge SE. Thus, the spatial correlation feedback can significantly enhance the overall performance of MU-MIMO.

The above embodiments are only for exemplary purposes, not intended to limit the present invention. A person of normal skill in the art should understand that various modifications and substitutions to the embodiments are allowed without departing from the scope and spirit of the present invention, and these modifications and substitutions fall within the scope as limited by the appended claims.

**Claims**

1.  A method for performing spatial information-assisted hierarchical feedback in a mobile communication system, at a user terminal, the method comprising:

measuring a spatial correlation matrix of multiple transmit antennas of a base station;
transforming a hierarchical codebook in a hierarchical feedback mode using the spatial correlation matrix;
selecting a codeword from the transformed hierarchical codebook; and
feeding back the spatial correlation matrix and a precoding matrix index corresponding to an index of the selected codeword from the user equipment to the base station using the hierarchical feedback mode.

2. The method according to claim 1, at the base station, the method comprising:

re-constructing the selected codeword to perform precoding and scheduling, based on the spatial correlation matrix and the precoding matrix index as fed back from the user terminal.

3. The method according to claim 1, wherein the hierarchical codebook in the hierarchical feedback mode is a codebook as trained and constructed based on user terminal channel information over time or frequency domain.

4. The method according to claim 1, wherein selecting a codeword from the transformed hierarchical codebook comprises: selecting a deepest-level codeword from the transformed hierarchical codebook.

5. The method according to claim 1, wherein transforming a hierarchical codebook in a hierarchical feedback mode using the spatial correlation matrix comprises: pre-multiplying the spatial correlation matrix by a codeword in each level of the hierarchical codebook in the hierarchical feedback mode.

6. The method according to claim 1, wherein the spatial correlation matrix is long-term information synchronized between the base station and the user terminal over a period that is far longer than the period of feeding back the precoding matrix index.

7. The method according to claim 1, wherein the mobile communication system is a multi-user Multiple Input Multiple Output communication system.

8. An apparatus for performing spatial information-assisted hierarchical feedback in a mobile communication system, comprising:

a measuring component configured to measure a spatial correlation matrix of multiple transmit antennas of a base station;
a transforming component configured to transform a hierarchical codebook in a hierarchical feedback mode using the spatial correlation matrix;
a selecting component configured to select a codeword from the transformed hierarchical codebook; and
a feedback component configured to feed back the spatial correlation matrix and a precoding matrix index corresponding to an index of the selected codeword from the user equipment to the base station using the hierarchical feedback mode.

9. The apparatus according to claim 8, wherein the hierarchical codebook in the hierarchical feedback mode is a codebook as trained and constructed based on time or frequency information of a channel of the user terminal.

10. The apparatus according to claim 8, wherein the selecting component selects a deepest-level codeword from the transformed hierarchical codebook.

11. The apparatus according to claim 8, wherein the transforming component pre-multiplies the spatial correlation matrix by a codeword in each level of the hierarchical codebook in the hierarchical feedback mode.

12. The apparatus according to claim 8, wherein the spatial correlation matrix is long-term information synchronized between the base station and the user terminal over a period that is far longer than the period of feeding back the precoding matrix index.

13. The apparatus according to claim 8, wherein the mobile communication system is a multi-user Multiple Input Multiple Output communication system.

FIG. 1

a user equipment measures a spatial correlation matrix of multiple transmit antennas of a base station — 201

the user terminal transforms a hierarchical codebook in a hierarchical feedback mode using the spatial correlation matrix — 203

the user terminal selects a codeword from a transformed hierarchical codebook — 205

the spatial correlation matrix and a precoding matrix index corresponding to an index of the selected codeword are fed back from the user equipment to the base station using a hierarchical feedback mode — 207

the base station re-constructs the selected codeword based on the precoding matrix index and the spatial correlation matrix as fed back from the user terminal to perform precoding and scheduling — 209

FIG. 2

| Measuring Component 301 | Transforming Component 303 | Selecting Component 305 | Feedback Component 307 |

FIG. 3

| INTERNATIONAL SEARCH REPORT | International application No. |
|---|---|
| | PCT/CN2010/000442 |

**A. CLASSIFICATION OF SUBJECT MATTER**

H04L 1/06(2006.01) i

According to International Patent Classification (IPC) or to both national classification and IPC

**B. FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNPAT WPI EPODOC CNKI: hierarchy feed pre-code matrix code space convert index base station user synchronization information

**C. DOCUMENTS CONSIDERED TO BE RELEVANT**

| Category* | Citation of document, with indication, where appropriate, of the relevant passages | Relevant to claim No. |
|---|---|---|
| A | CN101212281A (HUAWEI TECHNOLOGIES CO., LTD.) | 1-13 |
| | 02 Jul. 2008（02.07.2008）the whole document | |
| A | CN101232356A （HUAWEI TECHNOLOGIES CO., LTD.） | 1-13 |
| | 30 Jul. 2008（30.07.2008）the whole document | |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 14 Dec. 2010(14.12.2010) | **13 Jan. 2011 (13.01.2011)** |
| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br><br>Dong, Le<br><br>Telephone No. (86-10)62411673 |

Form PCT/ISA /210 (second sheet) (July 2009)

**INTERNATIONAL SEARCH REPORT**
Information on patent family members

| International application No. |
|---|
| PCT/CN2010/000442 |

| Patent Documents referred in the Report | Publication Date | Patent Family | Publication Date |
|---|---|---|---|
| CN101212281A | 02.07.2008 | WO2008083576A1 | 17.07.2008 |
| CN101232356A | 30.07.2008 | none | |

Form PCT/ISA /210 (patent family annex) (July 2009)